# EUROPEAN PATENT SPECIFICATION

(11) **EP 3 420 775 B1**
(45) Date of publication and mention of the grant of the patent: **08.01.2020**
(21) Application number: 17709536.1
(22) Date of filing: 23.02.2017
(51) Int. Cl.: H04W 74/08, H04W 52/36, H04W 52/40, H04W 16/10, H04W 84/12

(54) **ACCESS POINT GUIDED REUSE**
ZUGANGSPUNKTGEFÜHRTE WIEDERVERWENDUNG
RÉUTILISATION GUIDÉE DE POINT D'ACCÈS

(30) Priority: 23.02.2016 US 201662298973 P; 22.02.2017 US 201715439510
(43) Date of publication of application: 02.01.2019
(73) Proprietor: Qualcomm Incorporated, San Diego, CA 92121-1714 (US)
(72) Inventor: BARRIAC, Gwendolyn, Denise, San Diego California 92121-1714 (US); MERLIN, Simone, San Diego California 92121-1714 (US); ASTERJADHI, Alfred, San Diego California 92121-1714 (US); CHERIAN, George, San Diego California 92121-1714 (US); ZHOU, Yan, San Diego California 92121-1714 (US); TIAN, Qingjiang, San Diego California 92121-1714 (US)
(74) Representative: Wegner, Hans
(86) International application number: PCT/US2017/019017
(87) International publication number: WO 2017/147231

(56) References cited:
- WO-A1-2015/006756
- WO-A1-2016/006163
- US-A1- 2014 126 471
- US-A1- 2014 341 128
- Timo Koskela ET AL: "Discussion on Potential Techniques for HEW", , 15 July 2013 (2013-07-15), XP055149691, Retrieved from the Internet: URL:https://mentor.ieee.org/802.11/dcn/13/ 11-13-0871-00-0hew-discussion-on-potential -techniques-for-hew.pptx [retrieved on 2014-10-29]
- ROBERT STACEY (INTEL): "Spec Framework ; 11-15-0132-14-00ax-spec-framework", IEEE DRAFT; 11-15-0132-14-00AX-SPEC-FRAMEWORK, IEEE-SA MENTOR, PISCATAWAY, NJ USA, vol. 802.11ax, no. 14, 22 January 2016 (2016-01-22), pages 1-43, XP068104677, [retrieved on 2016-01-22]
- Robert Stacey ET AL: "IEEE 802.11-16/0024r0: IEEE P802.11 Wireless LANs, Proposed TGax draft specification", , 15 January 2016 (2016-01-15), pages 1-147, XP055338464, Retrieved from the Internet: URL:https://mentor.ieee.org/802.11/dcn/16/ 11-16-1211-02-00ax-cr-cid-122-576-972-2598 .docx [retrieved on 2017-01-24]
- CISCO SYSTEMS: "Views on Energy Detection Threshold Adaptation", 3GPP DRAFT; R1-156489_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Anaheim, USA; 20151115 - 20151122 7 November 2015 (2015-11-07), XP051042053, Retrieved from the Internet: URL:http://www.3gpp.org/ftp/tsg_ran/WG1_RL 1/TSGR1_83/Docs/ [retrieved on 2015-11-07]

## Description

### CROSS REFERENCES

The present Application for Patent claims priority to U.S. Patent Application No. 15/439,510 by Barriac et al., entitled "Access Point Guided Reuse," filed February 22, 2017; and U.S. Provisional Patent Application No. 62/298,973 by Barriac et al., entitled "Access Point Guided Reuse," filed February 23, 2016; each of which is assigned to the assignee hereof.

### BACKGROUND

The following relates generally to wireless communication and more specifically to access point guided reuse.

Wireless communications systems are widely deployed to provide various types of communication content such as voice, video, packet data, messaging, broadcast, and so on. These systems may be multiple-access systems capable of supporting communication with multiple users by sharing the available system resources (e.g., time, frequency, and power). A wireless network, for example a wireless local area network (WLAN), such as a Wi-Fi (i.e., IEEE 802.11) network may include access point (AP) that may communicate with one or more stations (STAs) or mobile devices. The AP may be coupled to a network, such as the Internet, and may enable a mobile device to communicate via the network (or communicate with other devices coupled to the access point). A wireless device may communicate with a network device bi-directionally. For example, in a WLAN, an STA may communicate with an associated AP via downlink (DL) and uplink (UL). The DL (or forward link) may refer to the communication link from the AP to the station, and the UL (or reverse link) may refer to the communication link from the station to the AP.

A group of STAs that are communicating with an AP may be known as a basic service set (BSS). In some cases, the area of one BSS may overlap with the area of another BSS, which may be known as an overlapping BSS (OBSS). Transmissions from different devices within the OBSS may interfere with one another, and techniques used by each device to limit this interference may limit the efficiency of communications between STAs and APs within the OBSS.

WO 2016/006163 A1 discloses an electronic device including circuitry configured to perform control in a manner that a Physical Layer Convergence Protocol (PLCP) header format is selected from a plurality of PLCP header formats; and append the selected PLCP header to a physical layer packet for transmission.

Document "Discussion on Potential Techniques for HEW" (Timo Koskela et al, URL: https://mentor.ieee.org/802.11/dcn/13/11-13-0871-00-0hew-discussion-on-potential-techniques-for-hew.pptx, XP055149691) discusses OFDMA as a potential technique for 802.11 HEW to improve system efficiency in a multi BSS scenario.

WO 2015/006756 A1 discloses a method to improve the area throughput of dense wireless local area networks (WLAN) by channel access control. The method allows an access point to obtain information of a plurality of stations within the wireless network.

US 2014/341128 A1 discloses a method, apparatus and computer program for providing scaled coverage.

US 2014/126471 A1 discloses systems and methods for tuning media access parameters.

Document "Spec Framework ; 11-15-0132-14-00ax-spec-framework" (Robert Stacey (INTEL), IEEE-SA MENTOR, PISCATAWAY, NJ USA, vol. 802.11ax, no. 14, 22 January 2016, pages 1 - 43, XP068104677) provides an outline of each the functional blocks for TGax.

Document "IEEE 802.11-16/0024r0: IEEE P802.11 Wireless LANs, Proposed TGax draft specification" (Robert Stacey et al, URL: https://mentor.ieee.org/802.11/dcn/16/11-16-1211-02-00ax-cr-cid-122-576-972-2598.docx*,* XP055338464) provides draft specifications for TGax.

Document "Views on Energy Detection Threshold Adaptation" (CISCO SYSTEMS, URL: http://www.3gpp.org/ftp/tsg_ran/WG1_RL1/TSGR1_83/Docs/, XP051042053) discusses how to adapt the energy detection threshold at LAA eNB for RANi.

### SUMMARY

The invention is defined in independent method claims 1 and 9, in independent apparatus claims 12 and 14 and in independent computer program claim 15. Further features are defined in dependent claims.

A wireless device may receive a configuration message that includes overlapping basic service set (OBSS) coordination parameters. The OBSS coordination parameters may then be used to select an OBSS preamble detection (PD) threshold or a transmission (TX) power. For example, an OBSS coordination parameter may include an indication of an OBSS PD threshold or the TX power. An OBSS coordination parameter includes a range of OBSS PD thresholds or TX powers. In some cases, the coordination parameter may include selection criteria that may be used to select the indicated OBSS PD threshold or TX power. Additionally or alternatively, a range selection criteria may also be used to select from a range of OBSS PD thresholds and TX powers. The wireless device may use the selected OBSS PD threshold or TX power to communicate with an AP or another device. The wireless devices use or reuse of a particular wireless communication medium may thus be guided by another device, such as the AP.

### BRIEF DESCRIPTION OF THE DRAWINGS

FIG. 1 illustrates an example of a wireless communications system that supports access point guided reuse in accordance with aspects of the present disclosure;
FIG. 2 illustrates an example of a wireless communications system that supports access point guided reuse in accordance with aspects of the present disclosure;
FIG. 3 illustrates an example of an OBSS configuration mapping that supports access point guided reuse in accordance with aspects of the present disclosure;
FIG. 4 illustrates an example of a process flow in a system that supports access point guided reuse in accordance with aspects of the present disclosure;
FIGs. 5 through 7 show block diagrams of a wireless device that supports access point guided reuse in accordance with aspects of the present disclosure;
FIG. 8 illustrates a block diagram of a system including an STA that supports access point guided reuse in accordance with aspects of the present disclosure;
FIGs. 9 through 11 show block diagrams of a wireless device that supports access point guided reuse in accordance with aspects of the present disclosure;
FIGs. 12A and 12B illustrate a block diagrams of a system including an AP and a network device that support access point guided reuse in accordance with aspects of the present disclosure; and
FIGs. 13 through 19 illustrate methods for access point guided reuse in accordance with aspects of the present disclosure.

### DETAILED DESCRIPTION

In some wireless communications systems, a transmitting wireless device such as a station (STA) or an access point (AP) that is part of a basic service set (BSS) may perform a clear channel assessment (CCA) procedure to determine the availability of the radio frequency spectrum used for communication. Multiple BSSs can be in relative close proximity, and transmissions from an overlapping BSS (OBSS) may impact the ability of a device to obtain access to, or "win," the channel. For example, if an STA detects a packet (e.g., a preamble) from another device, the STA may abstain from transmitting for the duration of the detected packet if the receive power of the packet is above a threshold. However, if the STA detects a packet from another device, it may still transmit if the received power of the packet is less than a threshold. In some cases, an STA may increase the threshold if the STA's transmission (TX) power is correspondingly decreased by some amount.

The use of an adjustable OBSS preamble detection (PD) threshold may provide for increased throughput for wireless devices in an OBSS. However, should multiple devices attempt to independently utilize adjustable OBSS PD thresholds, the efficiencies gained through such methods may be lost. That is, a lack of cooperation or coordination between the wireless devices may result in inefficient communication, and some or all of the gain from using adjustable OBSS PD thresholds may be negated. For example, one or more STAs within a group of OBSSs may experience a coordination problem in which each individual STA has an incentive to choose a PD threshold and transmission power combination that results in overall reduced throughput compared to a PD threshold and transmission power combination that would result from a coordinated decision. In these cases, and without additional guidance from other devices in the system, there may be little incentive for STAs to operate in a manner that most effectively allocates the wireless medium.

Thus, a node of the wireless network (e.g., a coordinating network device or an AP) may enhance efficiency by determining the OBSS PD threshold and TX power used by STAs in the OBSS. The node may guide the reuse of communications resources to avoid uncoordinated efforts by multiple STAs to reduce interference. In such cases, an AP may transmit OBSS coordination parameters to an STA using a configuration message. The OBSS coordination parameters may include a specific OBSS PD threshold or TX power for STAs to use while in the OBSS. The AP also provides a range of OBSS PD thresholds and corresponding TX powers from which STAs choose from. Additionally or alternatively, the AP may transmit selection criteria or a formula for STAs to use in determining an OBSS PD threshold or TX power. Similarly, range selection criteria or a formula may be provided to the STAs to be used in selecting from a range of OBSS PD thresholds and TX powers chosen by the AP. In some cases, a node may allow wireless devices to change their OBSS PD threshold or TX power dynamically based on information within received packets. An STA may also report information associated with the OBSS PD threshold and TX power currently in use, and may indicate an OBSS PD threshold or TX power that may enable improved performance.

Aspects of the disclosure introduced above are described more fully below in the context of a wireless communication system. An example of a configuration mapping used for mapping OBSS PD thresholds and TX powers is then described for wireless devices using access point guided reuse. Aspects of the disclosure are further illustrated by and described with reference to apparatus diagrams, system diagrams, and flowcharts that relate to access point guided reuse.

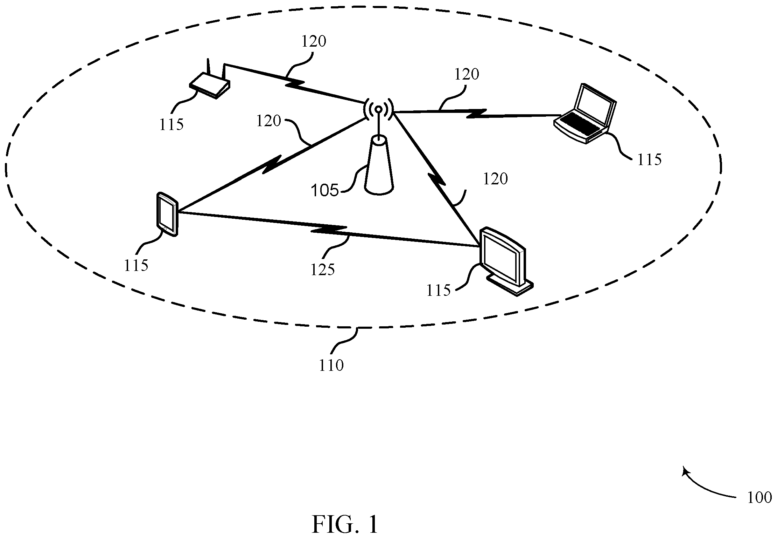

**FIG. 1** illustrates a WLAN 100 (also known as a Wi-Fi network) that supports communication in accordance with various aspects of the present disclosure. The WLAN 100 may include an AP 105 and multiple associated STAs 115, which may represent devices such as mobile stations, personal digital assistants (PDAs), other handheld devices, netbooks, notebook computers, tablet computers, laptops, display devices (e.g., TVs, computer monitors, etc.), printers, etc. The AP 105 and the associated stations 115 may represent a BSS or an extended service set (ESS). The various STAs 115 in the network are able to communicate with one another through the AP 105. Also shown is a coverage area 110 of the AP 105, which may represent a basic service area (BSA) of the WLAN 100. An extended network station (not shown) associated with the WLAN 100 may be connected to a wired or wireless distribution system that may allow multiple APs 105 to be connected in an ESS. WLAN 100 may enable enhanced efficiency when an AP 105 coordinates OBSS PD thresholds and TX powers used by wireless devices.

Although not shown in FIG. 1, an STA 115 may be located in the intersection of more than one coverage area 110 and may associate with more than one AP 105. A single AP 105 and an associated set of STAs 115 may be referred to as a BSS. An ESS is a set of connected BSSs. A distribution system (not shown) may be used to connect APs 105 in an ESS. In some cases, the coverage area 110 of an AP 105 may be divided into sectors (also not shown). The WLAN 100 may include APs 105 of different types (e.g., metropolitan area, home network, etc.), with varying and overlapping coverage areas 110. Two STAs 115 may also communicate directly via a direct wireless link 125 regardless of whether both STAs 115 are in the same coverage area 110. Examples of direct wireless links 120 may include Wi-Fi Direct connections, Wi-Fi Tunneled Direct Link Setup (TDLS) links, and other group connections. STAs 115 and APs 105 may communicate according to the WLAN radio and baseband protocol for physical (PHY) and medium access control (MAC) layers from IEEE 802.11 and versions including, but not limited to, 802.11b, 802.11g, 802.11a, 802.1In, 802.11ac, 802.11ad, 802.11ah, etc. In other implementations, peer-to-peer connections or ad hoc networks may be implemented within WLAN 100.

In some cases, an STA 115 or AP 105 may operate in a shared or unlicensed frequency spectrum. These devices may perform a CCA prior to communicating in order to determine whether the channel is available. A CCA may include an energy detection procedure to determine whether there are any other active transmissions. For example, the device may infer that a change in a received signal strength indication (RSSI) of a power meter indicates that a channel is occupied. Specifically, signal power is that is concentrated in a certain bandwidth and exceeds a predetermined noise floor may indicate another wireless transmitter. A CCA may also include detection of specific sequences that indicate use of the channel. For example, another device may transmit a specific preamble prior to transmitting a data sequence.

In some cases, after identifying the interfering transmission is associated with an OBSS, the STA 115 may compare an RSSI or power density of the interfering transmission with an OBSS threshold value. If the RSSI or power density is above the OBSS threshold, STA 115 may refrain from transmitting in accordance with a collision-based protocol. Conversely, if the RSSI or power density is below the OBSS threshold, STA 115 may conduct transmissions to AP 105 concurrently with the interfering transmission. In this way, OBSSs may reuse communication resources and increase throughput at the network. An interfering transmission may include a WLAN packet, which may include a preamble and a data region. In some instances, the STA 115 could reduce its transmit power in order to increase the OBSS threshold value so that it could transmit on top of the OBSS packet.

As described herein, an STA 115 may receive a configuration message that includes OBSS coordination parameters. The OBSS coordination parameters may then be used to select an OBSS PD threshold or a TX power. For example, an OBSS coordination parameter may include an indication of an OBSS PD threshold or the TX power. An OBSS coordination parameter includes a range of OBSS PD thresholds or TX powers. In some cases, the coordination parameter may include selection criteria that may be used to select the indicated OBSS PD threshold or TX power. Additionally or alternatively, a range selection criteria may also be used to select from a range of OBSS PD thresholds and TX powers. The wireless device may then use the selected OBSS PD threshold or TX power to communicate with an AP 105.

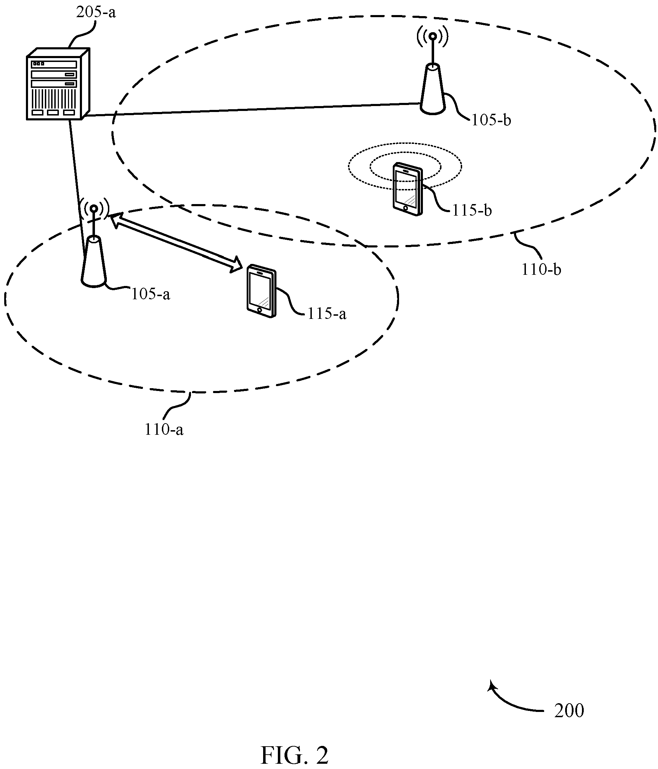

**FIG. 2** illustrates an example of a wireless communications system 200 that supports access point guided reuse. Wireless communications system 200 may include AP 105-a and STA 115-a associated with a first BSS with a coverage area 110-a. Wireless communications system 200 may also include AP 105-b and STA 115-b, which may be associated with an OBSS having a coverage area 110-b that overlaps coverage area 110-a. AP 105-a, AP 105-b, STA 115-a, and STA 115-b may all communicate with one another and may be examples of the corresponding devices described with reference to FIG. 1. The examples described below with reference to an STA 115 may be performed by any number of wireless devices. Wireless communications system 200 may implement the transmission of OBSS PD thresholds and TX power levels by an AP 105.

In wireless communications system 200, a transmitting wireless device (e.g., STA 115-a or AP 105-a) may perform a CCA procedure to determine the availability of the radio frequency spectrum used for communication. In some cases, multiple BSSs can be in relative close proximity, and interference from STA 115-b may affect the transmission of STA 115-a. STA 115-a may detect a preamble from STA 115-b and determine whether to transmit. For example, if STA 115-a detects the preamble from STA 115-b, STA 115-a may refrain from transmitting if the power associated with the preamble is above a threshold. However, STA 115-a may drop the received preamble and proceed with transmitting if the power of the preamble is less than a pre-determined threshold (and, in some cases, of the transmission power of STA 115-a is below a corresponding power threshold).

Thus, in some cases, STA 115-a may adjust the OBSS PD threshold while correspondingly adjusting their TX power level. For example, STA 115-a may increase its OBSS PD threshold level if its TX power is decreased. After increasing the OBSS PD threshold, an OBSS physical layer convergence procedure (PLCP) protocol data unit (PPDU) from STA 115-b may be detected and STA 115-a may then determine whether to transmit based on the power associated with the OBSS PPDU.

The use of an adjustable OBSS PD threshold may enable increased throughput for STAs 115. However, should multiple devices (e.g., both STA 115-a and STA 115-b) attempt to independently utilize adjustable OBSS PD thresholds, the efficiencies gained through such methods may be lost. As discussed above, a lack of cooperation or coordination between STAs 115 may result in inefficient communication and any gain from using the adjustable OBSS PD threshold may be negated. For example, STA 115-a may adjust its OBSS PD threshold (and correspondingly reduce its TX power) while, unknown to STA 115-a, STA 115-b does not. Because STA 115-a performs the adjustment in an attempt to improve its own throughput, STA 115-b may suffer from decreased communications efficiency. Similarly, should STA 115-a leave its OBSS PD threshold as is to maintain a greater TX power and STA 115-b increases its OBSS PD threshold, STA 115-b may suffer from decreased communications efficiency. Without coordinated knowledge of how the other STA 115 will act, each STA 115 may only act in manner that increases its own performance and thus eliminate any gain in net efficiency for the wireless communications system.

To improve efficiency in wireless communications system 200, STAs 115 may be guided in the selection of their OBSS PD threshold and TX power. The OBSS PD threshold or TX power may be determined by network device 205-a or AP 105-a and transmitted to STA 115-a and STA 115-b. For example, AP 105-a may guide STA 115-a and STA 115-b in the selection of an OBSS PD threshold based on information retained at network device 205-a. This technique may be beneficial in managed networks where AP 105-a and/or network device 205-a have the information needed to enhance overall efficiency.

OBSS coordination parameters that include an OBSS PD threshold and TX power may be transmitted by AP 105-a in a configuration message to STA 115-a and STA 115-b. In some cases, AP 105-a may transmit a specific OBSS PD threshold or TX power for STA 115-a and STA 115-b to use while in the OBSS. After receiving the coordination parameter, STA 115-a may use the OBSS PD threshold and TX power to determine whether a received packet from STA 115-b can be dropped or if it should refrain from transmitting. AP 105-a also provides a range of OBSS PD thresholds and corresponding TX powers from which the STAs 115 choose from. For example, AP 105-a may select upper and lower boundaries that correspond to values of an OBSS PD threshold or TX power which STA 115-a and STA 115-b may operate within. This may allow multiple STAs 115 to operate at coordinated OBSS PD thresholds, but within a defined range that enhances efficiency as determined by AP 105-a or network device 205-a.

Additionally or alternatively, AP 105-a may provide criteria or a formula for STAs 115 to use in selecting their OBSS PD threshold and TX power. For example, if the coordination parameters are based on RSSI measurements from AP 105-a, AP 105-a may transmit criteria to STA 115-a and STA 115-b to determine the coordination parameters they select. Similarly, AP 105-a may provide criteria or a formula that allows STAs 115 to operate in a range of OBSS PD thresholds and TX powers as described above. In such cases, the STAs 115 may use the criteria to select the coordination parameters to use within an upper and lower bound of an OBSS PD threshold or TX power.

In some cases, AP 105-a may allow STA 115-a or STA 115-b to change their OBSS PD threshold and TX power dynamically based on information within incoming OBSS PPDUs. For example, AP 105-a may signal to STA 115-a that it may dynamically adjust its OBSS PD threshold, and STA 115-a may then select its OBSS PD threshold and TX power based on information contained within packets received from STA 115-b. That is, STA 115-a may have the freedom to dynamically choose the coordination parameters based on a transmission from AP 105-a.

In some examples, STA 115-a or STA 115-b may report information to AP 105-a regarding the OBSS PD threshold and TX power currently in use and may indicate an OBSS PD threshold that may enable improved performance. The reported information may be solicited by AP 105-a, or the STA 115 may offer the information to improve the ability of AP 105-a to provide coordination parameters. For example, STA 115-a may report its current OBSS PD threshold and TX power along with the available medium air time associated with those parameters. AP 105-a may then use this information to adjust the OBSS PD threshold used by STA 115-a if improved efficiency can be achieved. Similarly, STA 115-a may report a signal-to-noise ratio (SNR) (e.g., a signal-to-interference-plus-noise ratio (SINR)) associated with different OBSS PD thresholds and AP 105-a may determine the OBSS PD threshold based on the reported information. In some cases, STA 115-a may also report how often it sees incoming OBSS PPDUs.

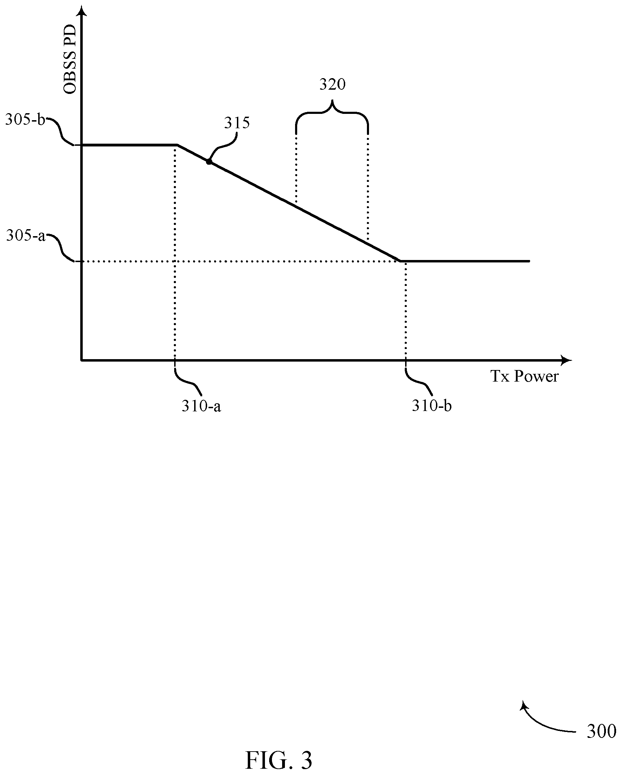

**FIG. 3** illustrates an example of an OBSS configuration mapping 300 for access point guided reuse. In some cases, OBSS configuration mapping 300 may represent aspects of techniques performed by an AP 105 or an STA 115 as described with reference to FIGs. 1-2, or performed by a network device 205-a as described with reference to FIG. 2. OBSS configuration mapping 300 may provide a mapping between OBSS PD thresholds and transmission powers used in a contention-based wireless communications system. While OBSS configuration mapping 300 demonstrates one example of a mapping of OBSS PD thresholds to TX powers, other plots providing different mappings may are possible for access point guided reuse.

In some cases, an STA 115 or AP 105 may use OBSS configuration mapping 300 to determine coordination parameters to use within an OBSS. For example, an STA 115 may initially use a first OBSS PD threshold 305-a and adjust to a second OBSS PD threshold 305-b (e.g.,, the first OBSS PD threshold may correspond to a value -82 dBm and the second OBSS PD threshold may correspond to a value of -62 dBm).

In some cases, the STA 115 may adjust its OBSS PD threshold along the OBSS configuration mapping in order to achieve improved throughput. For example, an STA 115 may adjust its OBSS PD threshold to a higher value that will allow it to discard any packets associated with a lower TX power received from a neighboring STA 115. The STA 115 may then proceed to communicate with an AP 105.

With the adjustment of OBSS PD threshold, TX power may be congruently adjusted according to OBSS coordination mapping 300. For example, an STA 115 adjusting its OBSS PD threshold to the second OBSS PD threshold 305-b may reduce its TX power to first TX power 310-a. Similarly, a second TX power 310-b that is greater than the first TX power 310-a may be associated with the first OBSS PD threshold 305-a. Thus, OBSS PD thresholds may be mapped to TX powers based on the OBSS configuration mapping 300.

In some cases, an AP 105 may transmit an OBSS coordination parameter to an STA 115, where the coordination parameter includes an operating point 315 associated with a TX power and a corresponding OBSS PD threshold. The AP 105-a may also provide selection criteria to the STA to determine operating point 315.

Additionally, the AP 105 provides a range 320 of TX powers and OBSS PD thresholds for the STA 115 to use. The AP 105 may also provide range selection criteria to the STA 115 to obtain the range 320 of OBSS PD thresholds and TX powers to use in the OBSS. In some cases, the AP 105 may allow STAs 115 to change their OBSS PD threshold or TX power dynamically along the OBSS coordination mapping 300 based on information within received packets (e.g., a received OBSS PPDU).

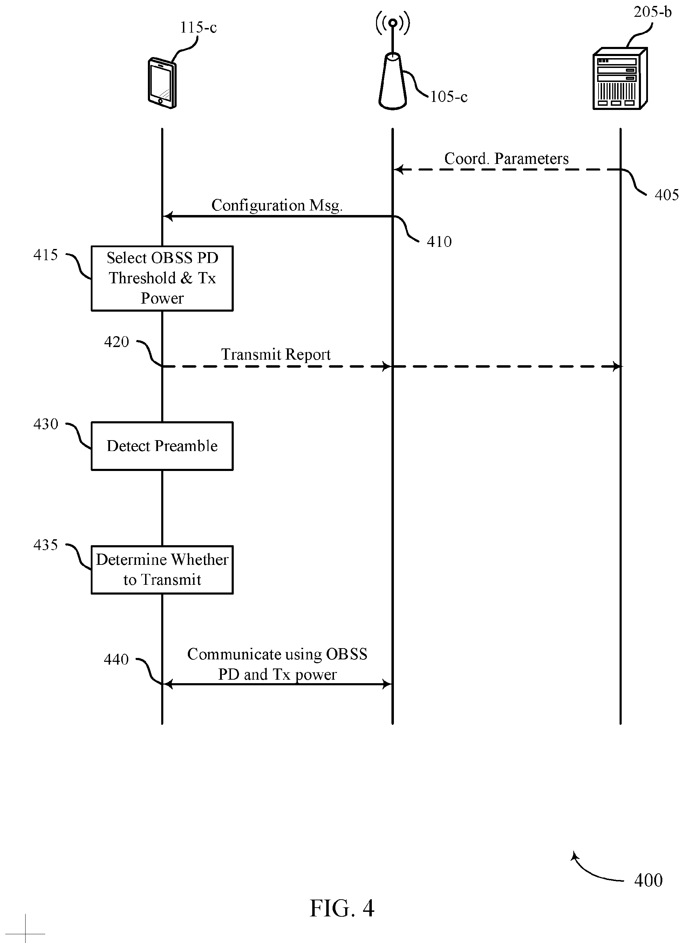

**FIG. 4** illustrates an example of a process flow 400 for access point guided reuse in accordance with various aspects of the present disclosure. Process flow 400 may include AP 105-c, STA 115-c, and network device 205-b which may be examples of the corresponding devices described with reference to FIG. 1-2.

In some examples, at step 405 network device 205-b may determine one or more OBSS coordination parameters and send the parameters to AP 105-c for inclusion in a configuration message. In other examples, AP 105-c may determine the one or more OBSS coordination parameters.

At step 410, AP 105-c may transmit and STA 115-c may receive the configuration message that includes the one or more OBSS coordination parameters. In some cases, the one or more OBSS coordination parameters include an indication of the OBSS PD threshold or the transmission power. The one or more OBSS coordination parameters may include an OBSS PD threshold selection criterion. The one or more OBSS coordination parameters include a range of a mapping between a set of OBSS PD thresholds and a set of transmission power levels.

Additionally or alternatively, the one or more OBSS coordination parameters include a range selection criterion corresponding to a mapping between a set of OBSS PD thresholds and a set of transmission power levels. In some cases, STA 115-c may identify a mapping between a set of OBSS PD thresholds and a set of transmission power levels, where selecting the OBSS PD threshold or the transmission power is based on the mapping.

At step 415, STA 115-c may select an OBSS PD threshold or a transmission power based on the OBSS coordination parameters of the configuration message. In some cases, the OBSS PD threshold or the transmission power is selected based on the OBSS PD threshold selection criterion. In some cases, the OBSS PD threshold or the transmission power is selected from within the range of the mapping between the set of OBSS PD thresholds and the set of transmission power levels. Additionally or alternatively, the OBSS PD threshold or the transmission power is selected using the range selection criterion. In some examples, the one or more OBSS coordination parameters include an indication to autonomously select the OBSS PD threshold or the transmission power, or both.

At step 420, STA 115-c may optionally transmit, and AP 105-c may receive, a signal that indicates a selected OBSS PD threshold, a set of medium availability rates associated with a set of OBSS PD thresholds, an SNR, or a location. In some examples, AP 105-c may transmit the received signal to network device 205-b, which may be used by either network device 205-b or AP 105-c to determine additional OBSS coordination parameters.

At step 430, STA 115-c may detect a preamble for a transmission from a device in an OBSS. In some examples, the OBSS PD threshold, or the transmission power are selected based on the detected preamble.

At step 435, STA 115-c may determine to transmit a message (e.g., transmit a message to the AP 105-c, to the network device 205-b, or to another wireless device) or to refrain from transmitting the message based on the OBSS PD threshold. At step 440, STA 115-c and AP 105-c may communicate using the OBSS PD threshold or the transmission power.

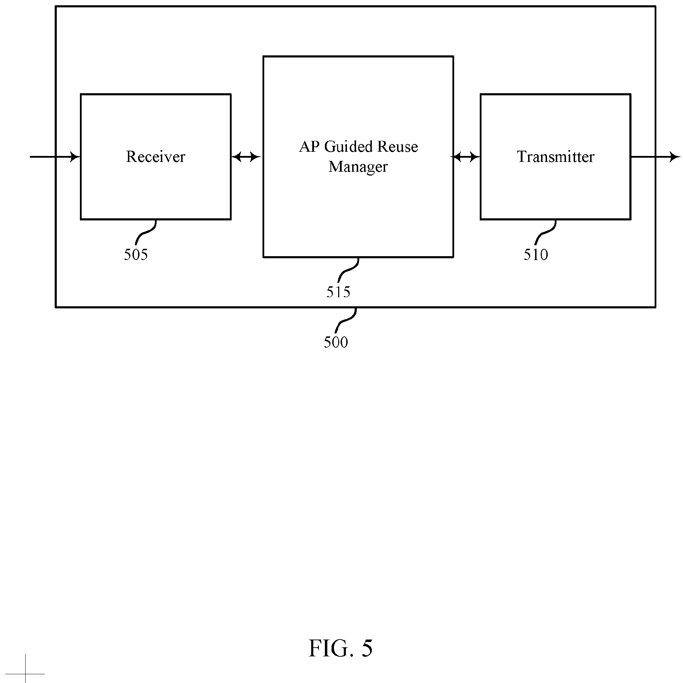

**FIG. 5** shows a block diagram of a wireless device 500 that supports access point guided reuse in accordance with various aspects of the present disclosure. Wireless device 500 may be an example of aspects of an STA 115 described with reference to FIGs. 1 and 2. Wireless device 500 may include receiver 505, transmitter 510 and AP guided reuse manager 515. Wireless device 500 may also include a processor. Each of these components may be in communication with each other.

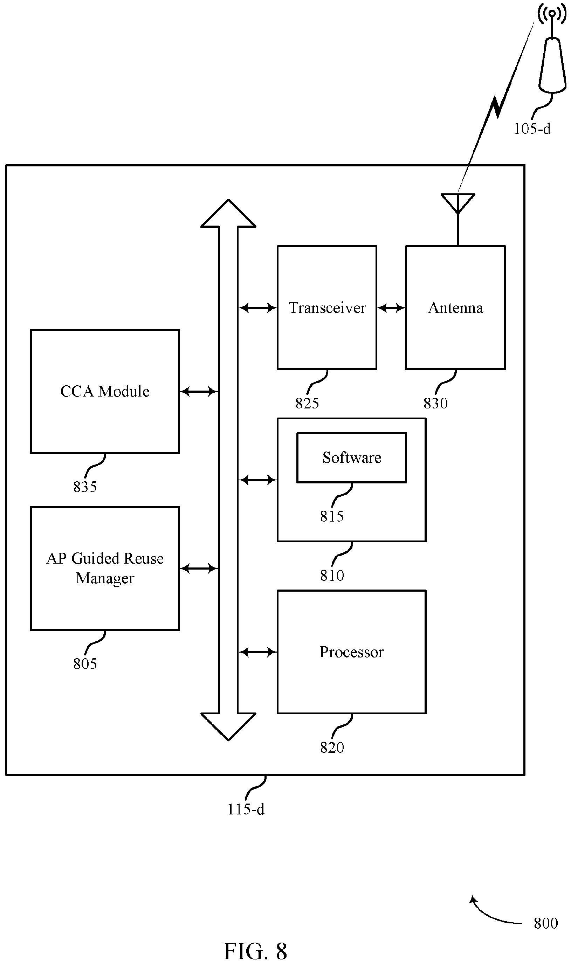

The receiver 505 may receive information such as packets, user data, or control information associated with various information channels (e.g., control channels, data channels, and information related to access point guided reuse, etc.). Information may be passed on to other components of the device. The receiver 505 may be an example of aspects of the transceiver 825 described with reference to FIG. 8.

The transmitter 510 may transmit signals received from other components of wireless device 500. In some examples, the transmitter 510 may be collocated with a receiver in a transceiver module. For example, the transmitter 510 may be an example of aspects of the transceiver 825 described with reference to FIG. 8. The transmitter 510 may include a single antenna, or it may include a plurality of antennas.

The AP guided reuse manager 515 may receive a configuration message that includes one or more OBSS coordination parameters, select an OBSS PD threshold or a transmission power based on the OBSS coordination parameters of the configuration message, and communicate with an AP using the OBSS PD threshold or the transmission power. In some cases, the AP guided reuse manager may determine whether to transmit based on the OBSS PD threshold. The AP guided reuse manager 515 may also be an example of aspects of the AP guided reuse manager 805 described with reference to FIG. 8.

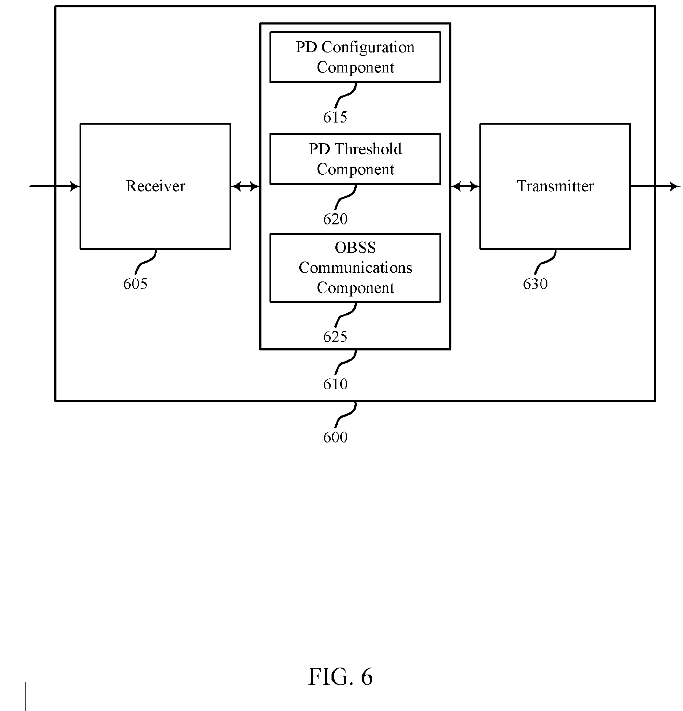

**FIG. 6** shows a block diagram of a wireless device 600 that supports access point guided reuse in accordance with various aspects of the present disclosure. Wireless device 600 may be an example of aspects of a wireless device 500 or an STA 115 described with reference to FIGs. 1, 2 and 5. Wireless device 600 may include receiver 605, AP guided reuse manager 610 and transmitter 630. Wireless device 600 may also include a processor. Each of these components may be in communication with each other.

The receiver 605 may receive information which may be passed on to other components of the device. The receiver 605 may also perform the functions described with reference to the receiver 505 of FIG. 5. The receiver 605 may be an example of aspects of the transceiver 825 described with reference to FIG. 8.

The AP guided reuse manager 610 may be an example of aspects of AP guided reuse manager 515 described with reference to FIG. 5. The AP guided reuse manager 610 may include PD configuration component 615, PD threshold component 620 and OBSS communications component 625. The AP guided reuse manager 610 may be an example of aspects of the AP guided reuse manager 805 described with reference to FIG. 8.

The PD configuration component 615 may receive a configuration message that includes one or more OBSS coordination parameters. The one or more OBSS coordination parameters include a range of a mapping between a set of OBSS PD thresholds and a set of transmission power levels, where the OBSS PD threshold or the transmission power is selected from within the range.

In some cases, the one or more OBSS coordination parameters include a range selection criterion corresponding to a mapping between a set of OBSS PD thresholds and a set of transmission power levels, where the OBSS PD threshold or the transmission power is selected using the range selection criterion. In some cases, the one or more OBSS coordination parameters include an indication to autonomously select the OBSS PD threshold or the transmission power, or both.

In some cases, the one or more OBSS coordination parameters include an indication of the OBSS PD threshold or the transmission power. In some cases, the one or more OBSS coordination parameters include an OBSS PD threshold selection criterion, and where the OBSS PD threshold or the transmission power is selected based on the OBSS PD threshold selection criterion.

The PD threshold component 620 may determine to transmit a message (such as a message to an AP 105 or another wireless device) or to refrain from transmitting the message based on the OBSS PD threshold, and select an OBSS PD threshold or a transmission power based on the OBSS coordination parameters of the configuration message. In some cases, the OBSS PD threshold, or the transmission power are selected based on the detected preamble. The OBSS communications component 625 may communicate with an AP using the OBSS PD threshold or the transmission power.

The transmitter 630 may transmit signals received from other components of wireless device 600. In some examples, the transmitter 630 may be collocated with a receiver in a transceiver module. For example, the transmitter 630 may be an example of aspects of the transceiver 825 described with reference to FIG. 8. The transmitter 630 may utilize a single antenna, or it may utilize a plurality of antennas.

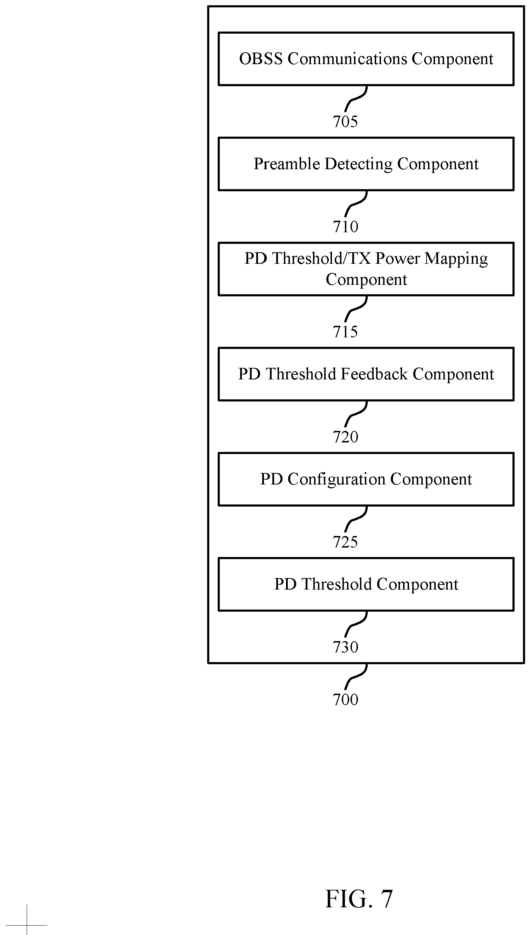

**FIG. 7** shows a block diagram of an AP guided reuse manager 700 which may be an example of the corresponding component of wireless device 500 or wireless device 600. That is, AP guided reuse manager 700 may be an example of aspects of AP guided reuse manager 515 or AP guided reuse manager 610 described with reference to FIGs. 5 and 6. The AP guided reuse manager 700 may also be an example of aspects of the AP guided reuse manager 805 described with reference to FIG. 8.

The AP guided reuse manager 700 may include OBSS communications component 705, preamble detecting component 710, PD threshold/TX power mapping component 715, PD threshold feedback component 720, PD configuration component 725 and PD threshold component 730. Each of these modules may communicate, directly or indirectly, with one another (e.g., via one or more buses). The OBSS communications component 705 may communicate with an AP using the OBSS PD threshold or the transmission power. The preamble detecting component 710 may detect a preamble for a transmission from a device in an OBSS.

The PD threshold/TX power mapping component 715 may identify a mapping between a set of OBSS PD thresholds and a set of transmission power levels, where selecting the OBSS PD threshold or the transmission power is based on the mapping. The PD threshold feedback component 720 may transmit a signal that indicates a selected OBSS PD threshold, a set of medium availability rates associated with a set of OBSS PD thresholds, an SNR, or a location.

The PD configuration component 725 may receive a configuration message that includes one or more OBSS coordination parameters. The one or more OBSS coordination parameters include a range of a mapping between a set of OBSS PD thresholds and a set of transmission power levels, where the OBSS PD threshold or the transmission power is selected from within the range.

The PD threshold component 730 may determine to transmit a message or to refrain from transmitting the message based on the OBSS PD threshold, and select an OBSS PD threshold or a transmission power based on the OBSS coordination parameters of the configuration message.

**FIG. 8** shows a diagram of a system 800 including a device that supports access point guided reuse in accordance with various aspects of the present disclosure. For example, system 800 may include STA 115-d, which may be an example of a wireless device 500, a wireless device 600, or an STA 115 as described with reference to FIGs. 1, 2 and 5 through 7.

STA 115-d may also include AP guided reuse manager 805, memory 810, processor 820, transceiver 825, antenna 830 and CCA module 835. Each of these modules may communicate, directly or indirectly, with one another (e.g., via one or more buses). The AP guided reuse manager 805 may be an example of an AP guided reuse manager as described with reference to FIGs. 5 through 7.

The memory 810 may include random access memory (RAM) and read only memory (ROM). The memory 810 may store computer-readable, computer-executable software including instructions that, when executed, cause the processor to perform various functions described herein (e.g., access point guided reuse, etc.). In some cases, the software 815 may not be directly executable by the processor but may cause a computer (e.g., when compiled and executed) to perform functions described herein. The processor 820 may include an intelligent hardware device, (e.g., a central processing unit (CPU), a microcontroller, an application specific integrated circuit (ASIC), etc.).

The transceiver 825 may communicate bi-directionally, via one or more antennas, wired, or wireless links, with one or more networks, as described above. For example, the transceiver 825 may communicate bi-directionally with an AP 105 or an STA 115. The transceiver 825 may also include a modem to modulate the packets and provide the modulated packets to the antennas for transmission, and to demodulate packets received from the antennas. In some cases, the wireless device may include a single antenna 830. However, in some cases the device may have more than one antenna 830, which may be capable of concurrently transmitting or receiving multiple wireless transmissions. CCA module 835 may perform a listen-before-talk (LBT) procedure such as a CCA as described above with reference to FIG. 1.

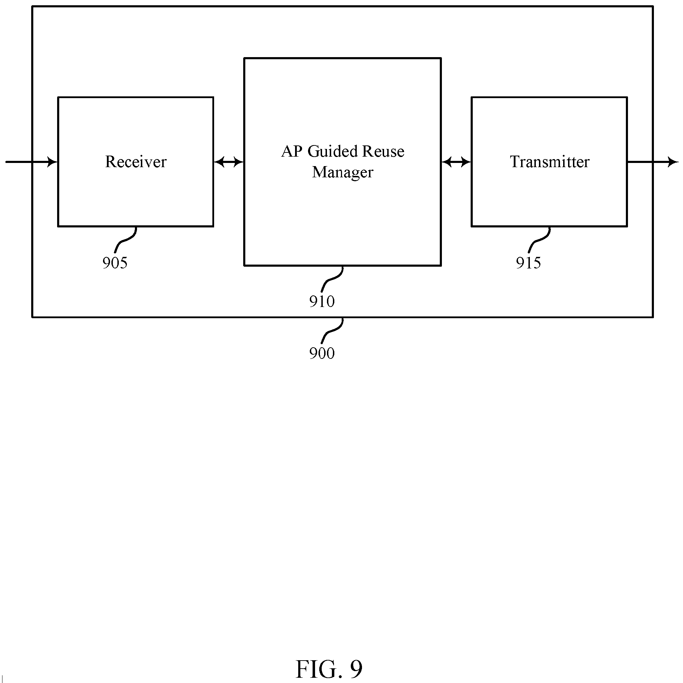

**FIG. 9** shows a block diagram of a wireless device 900 that supports access point guided reuse in accordance with various aspects of the present disclosure. Wireless device 900 may be an example of aspects of an AP 105 or a network device 205 described with reference to FIGs. 1 and 2. Wireless device 900 may include receiver 905, AP guided reuse manager 910 and transmitter 915. Wireless device 900 may also include a processor. Each of these components may be in communication with each other.

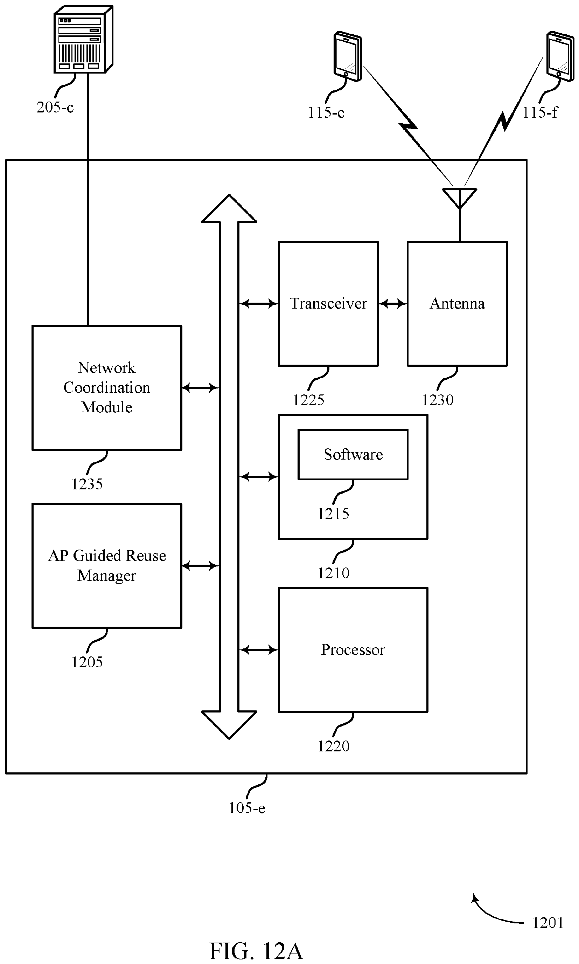

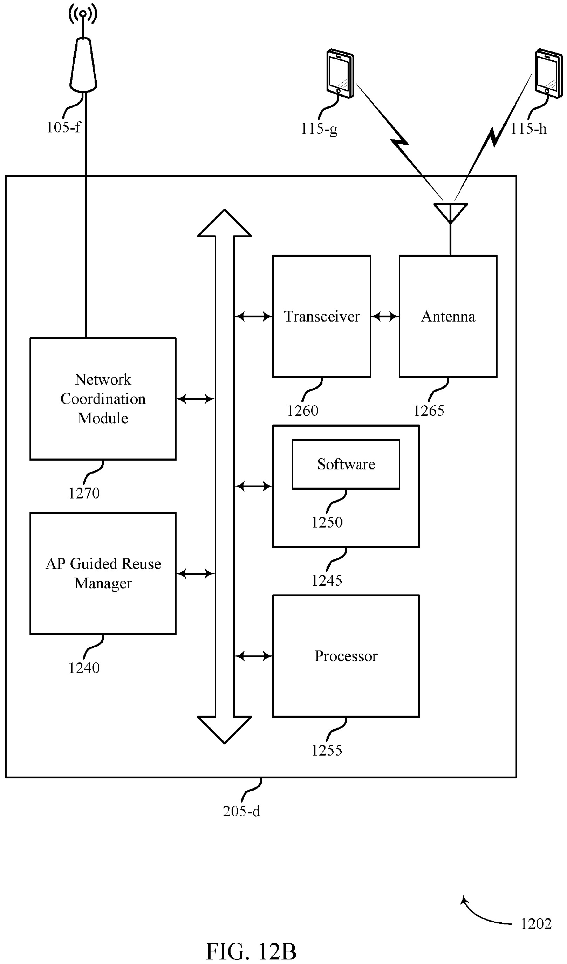

The receiver 905 may receive information such as packets, user data, or control information associated with various information channels (e.g., control channels, data channels, and information related to access point guided reuse, etc.). Information may be passed on to other components of the device. The receiver 905 may be an example of aspects of the transceiver 1225 or the transceiver 1260 described with reference to FIGs. 12A or 12B.

The AP guided reuse manager 910 may determine one or more OBSS coordination parameters, and communicate with an STA based on the one or more OBSS coordination parameters. The AP guided reuse manager 910 may also be an example of aspects of the AP guided reuse manager 1205 or the AP guided reuse manager 1240 described with reference to FIGs. 12A or 12B.

The transmitter 915 may transmit signals received from other components of wireless device 900. In some examples, the transmitter 915 may be collocated with a receiver in a transceiver module. For example, the transmitter 915 may be an example of aspects of the transceiver 1225 or the transceiver 1260 described with reference to FIGs. 12A or 12B. The transmitter 915 may include a single antenna, or it may include a plurality of antennas.

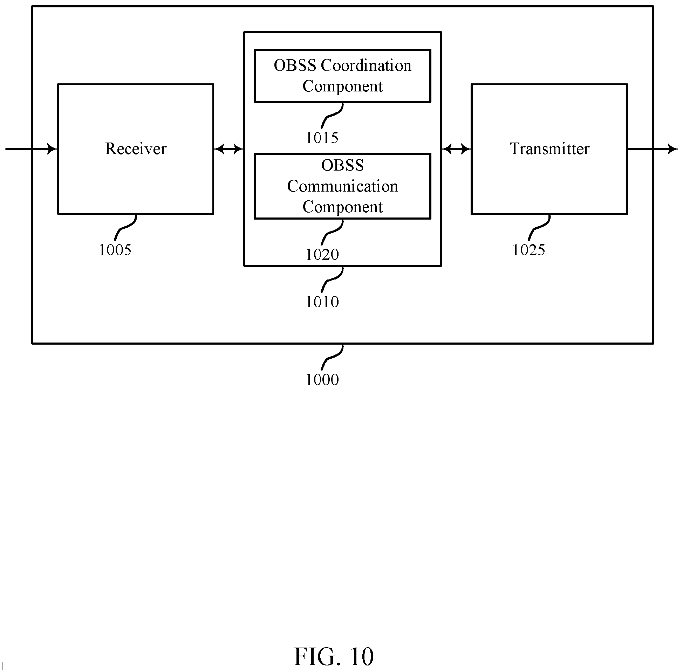

**FIG. 10** shows a block diagram of a wireless device 1000 that supports access point guided reuse in accordance with various aspects of the present disclosure. Wireless device 1000 may be an example of aspects of a wireless device 900, a network device 205, or an AP 105 described with reference to FIGs. 1, 2 and 9. Wireless device 1000 may include receiver 1005, AP guided reuse manager 1010 and transmitter 1025. Wireless device 1000 may also include a processor. Each of these components may be in communication with each other.

The receiver 1005 may receive information which may be passed on to other components of the device. The receiver 1005 may also perform the functions described with reference to the receiver 905 of FIG. 9. The receiver 1005 may be an example of aspects of the transceiver 1225 or the transceiver 1260 described with reference to FIGs. 12A or 12B.

The AP guided reuse manager 1010 may be an example of aspects of AP guided reuse manager 910 described with reference to FIG. 9. The AP guided reuse manager 1010 may include OBSS coordination component 1015 and OBSS communication component 1020. The AP guided reuse manager 1010 may be an example of aspects of the AP guided reuse manager 1205 or the AP guided reuse manager 1240 described with reference to FIGs. 12A or 12B.

The OBSS coordination component 1015 may determine one or more OBSS coordination parameters, send the one or more OBSS coordination parameters to an AP for inclusion in a configuration message (i.e., if wireless device 1000 corresponds to a network device 205), or receive the one or more OBSS coordination parameters from a network entity (i.e., if wireless device 1000 corresponds to an AP 105).

In some cases, the one or more OBSS coordination parameters include an indication of an OBSS PD threshold or a transmission power. In some cases, the one or more OBSS coordination parameters include an OBSS PD threshold selection criterion. The one or more OBSS coordination parameters include a range of a mapping between a set of OBSS PD thresholds and a set of transmission power levels. In some cases, the one or more OBSS coordination parameters include a range selection criterion corresponding to a mapping between a set of OBSS PD thresholds and a set of transmission power levels. In some cases, the one or more OBSS coordination parameters include an indication to autonomously select the OBSS PD threshold and the transmission power. The OBSS communication component 1020 may communicate with an STA based on the one or more OBSS coordination parameters.

The transmitter 1025 may transmit signals received from other components of wireless device 1000. In some examples, the transmitter 1025 may be collocated with a receiver in a transceiver module. For example, the transmitter 1025 may be an example of aspects of the transceiver 1225 or the transceiver 1260 described with reference to FIGs. 12A or 12B. The transmitter 1025 may utilize a single antenna, or it may utilize a plurality of antennas.

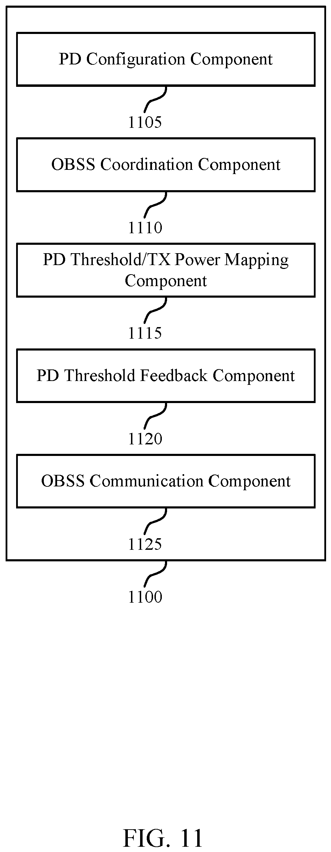

**FIG. 11** shows a block diagram of an AP guided reuse manager 1100 which may be an example of the corresponding component of wireless device 900 or wireless device 1000. That is, AP guided reuse manager 1100 may be an example of aspects of AP guided reuse manager 910 or AP guided reuse manager 1010 described with reference to FIGs. 9 and 10. The AP guided reuse manager 1100 may also be an example of aspects of the AP guided reuse manager 1205 or the AP guided reuse manager 1240 described with reference to FIGs. 12A or 12B.

The AP guided reuse manager 1100 may include PD configuration component 1105, OBSS coordination component 1110, PD threshold/TX power mapping component 1115, PD threshold feedback component 1120 and OBSS communication component 1125. Each of these modules may communicate, directly or indirectly, with one another (e.g., via one or more buses). The PD configuration component 1105 may transmit a configuration message to the STA, the configuration message including the one or more OBSS coordination parameters, where communication with the STA is based on the configuration message.

The OBSS coordination component 1110 may determine one or more OBSS coordination parameters, send the one or more OBSS coordination parameters to an AP for inclusion in a configuration message, and receive the one or more OBSS coordination parameters from a network entity. The PD threshold/TX power mapping component 1115 may identify a mapping between a set of OBSS PD thresholds to a set of transmission power levels, where the OBSS coordination parameters are based on the mapping.

The PD threshold feedback component 1120 may receive a signal that indicates a selected OBSS PD threshold, a set of medium availability rates associated with a set of OBSS PD thresholds, or an SNR, a location. The OBSS communication component 1125 may communicate with an STA based on the one or more OBSS coordination parameters.

**FIG. 12A** shows a diagram of a system 1201 including a device that supports access point guided reuse in accordance with various aspects of the present disclosure. For example, system 1201 may include AP 105-e, which may be an example of a wireless device 900, a wireless device 1000, or an AP 105 as described with reference to FIGs. 1, 2 and 9 through 11.

AP 105-e may also include AP guided reuse manager 1205, memory 1210, processor 1220, transceiver 1225, antenna 1230 and network coordination module 1235. Each of these modules may communicate, directly or indirectly, with one another (e.g., via one or more buses). The AP guided reuse manager 1205 may be an example of an AP guided reuse manager as described with reference to FIGs. 9 through 11.

The memory 1210 may include RAM and ROM. The memory 1210 may store computer-readable, computer-executable software including instructions that, when executed, cause the processor to perform various functions described herein (e.g., determining one or more OBSS coordination parameters, access point guided reuse, etc.). In some cases, the software 1215 may not be directly executable by the processor but may cause a computer (e.g., when compiled and executed) to perform functions described herein. The processor 1220 may include an intelligent hardware device, (e.g., a CPU, a microcontroller, an ASIC, etc.).

The transceiver 1225 may communicate bi-directionally, via one or more antennas, wired, or wireless links, with one or more networks, as described above. For example, the transceiver 1225 may communicate bi-directionally with an AP 105 or an STA 115. The transceiver 1225 may also include a modem to modulate the packets and provide the modulated packets to the antennas for transmission, and to demodulate packets received from the antennas. In some cases, the wireless device may include a single antenna 1230. However, in some cases the device may have more than one antenna 830, which may be capable of concurrently transmitting or receiving multiple wireless transmissions.

Network coordination module 1235 may coordinate with other AP's 105, e.g., to establish OBSS coordination parameters as described herein. In some cases, network coordination module 1235 may coordinate with a network device 205. In other cases, network coordination module 1235 may communicate directly with other AP's 105 (not shown).

**FIG. 12B** shows a diagram of a system 1202 including a device that supports access point guided reuse in accordance with various aspects of the present disclosure. For example, system 1202 may include network device 205-d, which may be an example of a wireless device 900, a wireless device 1000, or an network device 205 as described with reference to FIGs. 1, 2 and 9 through 11.

Network device 205-d may also include AP guided reuse manager 1240, memory 1245, processor 1255, transceiver 1260, antenna 1265 and network coordination module 1270. Each of these modules may communicate, directly or indirectly, with one another (e.g., via one or more buses). The AP guided reuse manager 1240 may be an example of an AP guided reuse manager as described with reference to FIGs. 9 through 11.

The memory 1245 may include RAM and ROM. The memory 1245 may store computer-readable, computer-executable software including instructions that, when executed, cause the processor to perform various functions described herein (e.g., determining OBSS coordination parameters, access point guided reuse, etc.). In some cases, the software 1250 may not be directly executable by the processor but may cause a computer (e.g., when compiled and executed) to perform functions described herein. The processor 1255 may include an intelligent hardware device, (e.g., a CPU, a microcontroller, an ASIC, etc.).

The transceiver 1260 may communicate bi-directionally, via one or more antennas, wired, or wireless links, with one or more networks, as described above. For example, the transceiver 1260 may communicate bi-directionally with an AP 105 or an STA 115. The transceiver 1260 may also include a modem to modulate the packets and provide the modulated packets to the antennas for transmission, and to demodulate packets received from the antennas.

In some cases, the wireless device may include a single antenna 1265. However, in some cases the device may have more than one antenna 1265, which may be capable of concurrently transmitting or receiving multiple wireless transmissions. Network coordination module 1270 may coordinate AP's 105, e.g., to establish OBSS coordination parameters as described herein.

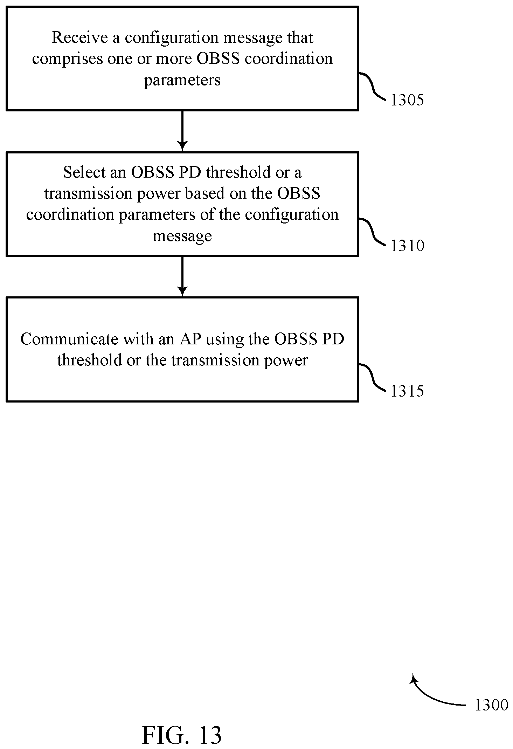

**FIG. 13** shows a flowchart illustrating a method 1300 for access point guided reuse in accordance with various aspects of the present disclosure. The operations of method 1300 may be implemented by a device such as an STA 115 or its components as described with reference to FIGs. 1 and 2. For example, the operations of method 1300 may be performed by the AP guided reuse manager as described herein. In some examples, the STA 115 may execute a set of codes to control the functional elements of the device to perform the functions described below. Additionally or alternatively, the STA 115 may perform aspects the functions described below using special-purpose hardware.

At block 1305, the STA 115 may receive a configuration message that includes one or more OBSS coordination parameters as described above with reference to FIGs. 2 through 4. In certain examples, the operations of block 1305 may be performed by the PD configuration component as described with reference to FIG. 6.

At block 1310, the STA 115 may select an OBSS PD threshold or a transmission power based on the OBSS coordination parameters of the configuration message as described above with reference to FIGs. 2 through 4. In certain examples, the operations of block 1310 may be performed by the PD threshold component as described with reference to FIG. 6.

At block 1315, the STA 115 may communicate with an AP using the OBSS PD threshold or the transmission power as described above with reference to FIGs. 2 through 4. In certain examples, the operations of block 1315 may be performed by the OBSS communications component as described with reference to FIG. 6.

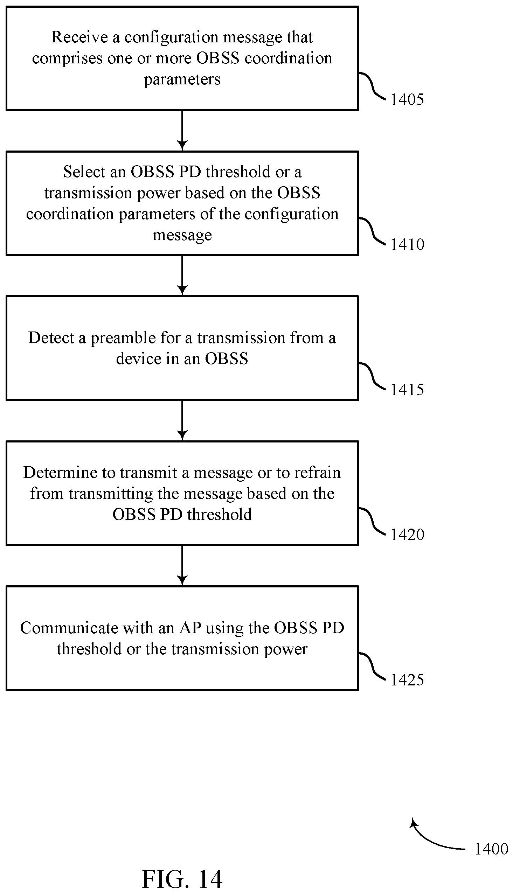

**FIG. 14** shows a flowchart illustrating a method 1400 for access point guided reuse in accordance with various aspects of the present disclosure. The operations of method 1400 may be implemented by a device such as an STA 115 or its components as described with reference to FIGs. 1 and 2. For example, the operations of method 1400 may be performed by the AP guided reuse manager as described herein. In some examples, the STA 115 may execute a set of codes to control the functional elements of the device to perform the functions described below. Additionally or alternatively, the STA 115 may perform aspects the functions described below using special-purpose hardware.

At block 1405, the STA 115 may receive a configuration message that includes one or more OBSS coordination parameters as described above with reference to FIGs. 2 through 4. In certain examples, the operations of block 1405 may be performed by the PD configuration component as described with reference to FIG. 6.

At block 1410, the STA 115 may select an OBSS PD threshold or a transmission power based on the OBSS coordination parameters of the configuration message as described above with reference to FIGs. 2 through 4. In certain examples, the operations of block 1410 may be performed by the PD threshold component as described with reference to FIG. 6.

At block 1415, the STA 115 may detect a preamble for a transmission from a device in an OBSS as described above with reference to FIGs. 2 through 4. In certain examples, the operations of block 1415 may be performed by the preamble detecting component as described with reference to FIG. 6.

At block 1420, the STA 115 may determine to transmit a message or to refrain from transmitting the message based on the OBSS PD threshold as described above with reference to FIGs. 2 through 4. In certain examples, the operations of block 1420 may be performed by the PD threshold component as described with reference to FIG. 6.

At block 1425, the STA 115 may communicate with an AP using the OBSS PD threshold or the transmission power as described above with reference to FIGs. 2 through 4. In certain examples, the operations of block 1425 may be performed by the OBSS communications component as described with reference to FIG. 6.

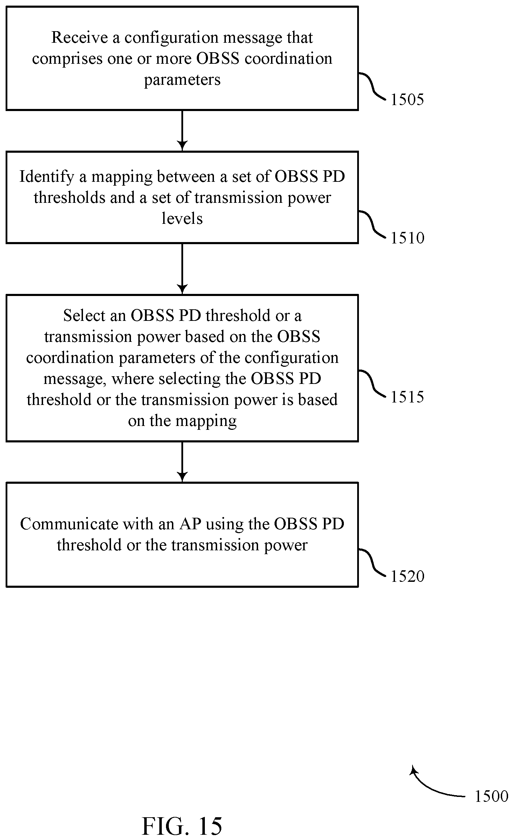

**FIG. 15** shows a flowchart illustrating a method 1500 for access point guided reuse in accordance with various aspects of the present disclosure. The operations of method 1500 may be implemented by a device such as an STA 115 or its components as described with reference to FIGs. 1 and 2. For example, the operations of method 1500 may be performed by the AP guided reuse manager as described herein. In some examples, the STA 115 may execute a set of codes to control the functional elements of the device to perform the functions described below. Additionally or alternatively, the STA 115 may perform aspects the functions described below using special-purpose hardware.

At block 1505, the STA 115 may receive a configuration message that includes one or more OBSS coordination parameters as described above with reference to FIGs. 2 through 4. In certain examples, the operations of block 1505 may be performed by the PD configuration component as described with reference to FIG. 6.

At block 1510, the STA 115 may identify a mapping between a set of OBSS PD thresholds and a set of transmission power levels as described above with reference to FIGs. 2 through 4. In certain examples, the operations of block 1510 may be performed by the PD threshold/TX power mapping component as described with reference to FIG. 6.

At block 1515, the STA 115 may select an OBSS PD threshold or a transmission power based on the OBSS coordination parameters of the configuration message, where selecting the OBSS PD threshold or the transmission power is based on the mapping as described above with reference to FIGs. 2 through 4. In certain examples, the operations of block 1515 may be performed by the PD threshold component as described with reference to FIG. 6.

At block 1520, the STA 115 may communicate with an AP using the OBSS PD threshold or the transmission power as described above with reference to FIGs. 2 through 4. In certain examples, the operations of block 1520 may be performed by the OBSS communications component as described with reference to FIG. 6.

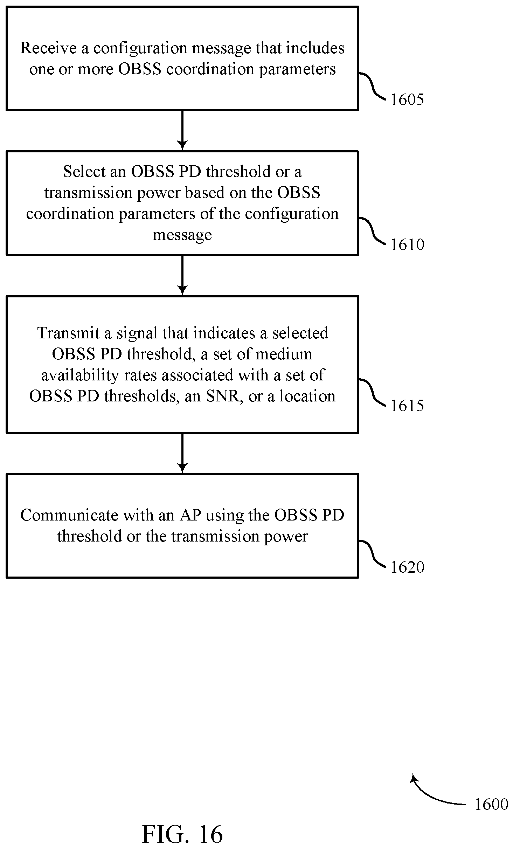

**FIG. 16** shows a flowchart illustrating a method 1600 for access point guided reuse in accordance with various aspects of the present disclosure. The operations of method 1600 may be implemented by a device such as an STA 115 or its components as described with reference to FIGs. 1 and 2. For example, the operations of method 1600 may be performed by the AP guided reuse manager as described herein. In some examples, the STA 115 may execute a set of codes to control the functional elements of the device to perform the functions described below. Additionally or alternatively, the STA 115 may perform aspects the functions described below using special-purpose hardware.

At block 1605, the STA 115 may receive a configuration message that includes one or more OBSS coordination parameters as described above with reference to FIGs. 2 through 4. In certain examples, the operations of block 1605 may be performed by the PD configuration component as described with reference to FIG. 6.

At block 1610, the STA 115 may select an OBSS PD threshold or a transmission power based on the OBSS coordination parameters of the configuration message as described above with reference to FIGs. 2 through 4. In certain examples, the operations of block 1610 may be performed by the PD threshold component as described with reference to FIG. 6.

At block 1615, the STA 115 may transmit a signal that indicates a selected OBSS PD threshold, a set of medium availability rates associated with a set of OBSS PD thresholds, an SNR, or a location as described above with reference to FIGs. 2 through 4. In certain examples, the operations of block 1615 may be performed by the PD threshold feedback component as described with reference to FIG. 6.

At block 1620, the STA 115 may communicate with an AP using the OBSS PD threshold or the transmission power as described above with reference to FIGs. 2 through 4. In certain examples, the operations of block 1620 may be performed by the OBSS communications component as described with reference to FIG. 6.

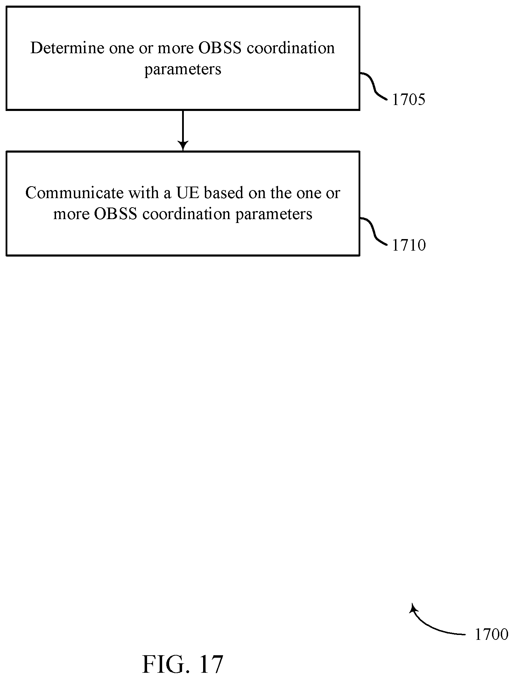

**FIG. 17** shows a flowchart illustrating a method 1700 for access point guided reuse in accordance with various aspects of the present disclosure. The operations of method 1700 may be implemented by a device such as an AP 105 or network device 205 or its components as described with reference to FIGs. 1 and 2. For example, the operations of method 1700 may be performed by the AP guided reuse manager as described herein. In some examples, the AP 105 or network device 205 may execute a set of codes to control the functional elements of the device to perform the functions described below. Additionally or alternatively, the AP 105 or network device 205 may perform aspects the functions described below using special-purpose hardware.

At block 1705, the AP 105 or network device 205 may determine one or more OBSS coordination parameters as described above with reference to FIGs. 2 through 4. In certain examples, the operations of block 1705 may be performed by the OBSS coordination component as described with reference to FIG. 10.

At block 1710, the AP 105 or network device 205 may communicate with an STA based on the one or more OBSS coordination parameters as described above with reference to FIGs. 2 through 4. In certain examples, the operations of block 1710 may be performed by the OBSS communication component as described with reference to FIG. 10.

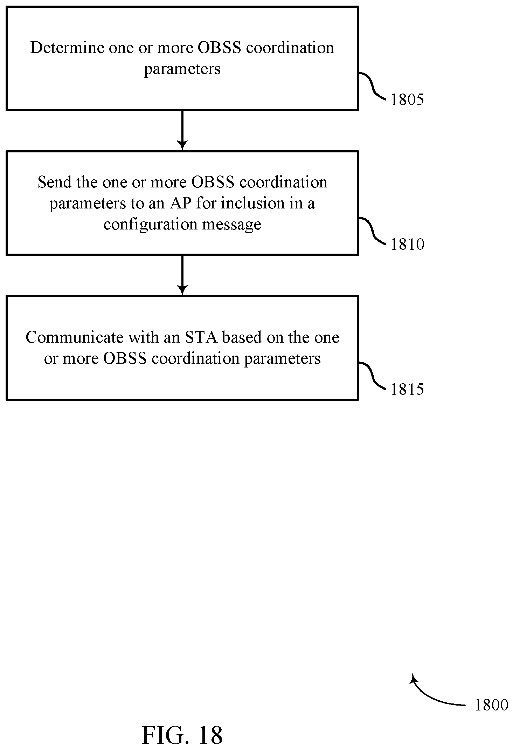

**FIG. 18** shows a flowchart illustrating a method 1800 for access point guided reuse in accordance with various aspects of the present disclosure. The operations of method 1800 may be implemented by a device such as a network device 205 or its components as described with reference to FIGs. 1 and 2. For example, the operations of method 1800 may be performed by the AP guided reuse manager as described herein. In some examples, the network device 205 may execute a set of codes to control the functional elements of the device to perform the functions described below. Additionally or alternatively, the network device 205 may perform aspects the functions described below using special-purpose hardware.

At block 1805, the network device 205 may determine one or more OBSS coordination parameters as described above with reference to FIGs. 2 through 4. In certain examples, the operations of block 1805 may be performed by the OBSS coordination component as described with reference to FIG. 10.

At block 1810, the network device 205 may send the one or more OBSS coordination parameters for inclusion in a configuration message as described above with reference to FIGs. 2 through 4 (e.g., send them to an AP). In certain examples, the operations of block 1810 may be performed by the OBSS coordination component as described with reference to FIG. 10.

At block 1815, the AP 105 may communicate with an STA based on the one or more OBSS coordination parameters as described above with reference to FIGs. 2 through 4. In certain examples, the operations of block 1815 may be performed by the OBSS communication component as described with reference to FIG. 10.

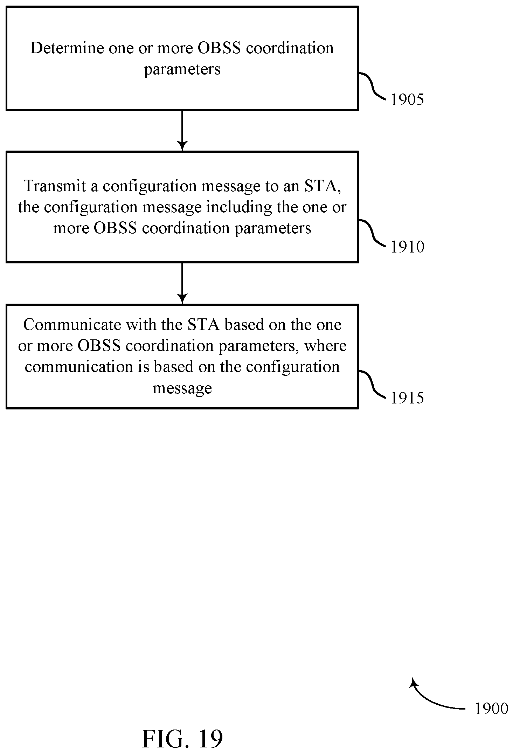

**FIG. 19** shows a flowchart illustrating a method 1900 for access point guided reuse in accordance with various aspects of the present disclosure. The operations of method 1900 may be implemented by a device such as an AP 105 or its components as described with reference to FIGs. 1 and 2. For example, the operations of method 1900 may be performed by the AP guided reuse manager as described herein. In some examples, the AP 105 may execute a set of codes to control the functional elements of the device to perform the functions described below. Additionally or alternatively, the AP 105 may perform aspects the functions described below using special-purpose hardware.

At block 1905, the AP 105 may determine one or more OBSS coordination parameters as described above with reference to FIGs. 2 through 4. In certain examples, the operations of block 1905 may be performed by the OBSS coordination component as described with reference to FIG. 10.

At block 1910, the AP 105 may transmit a configuration message to an STA, the configuration message including the one or more OBSS coordination parameters as described above with reference to FIGs. 2 through 4. In certain examples, the operations of block 1910 may be performed by the PD configuration component as described with reference to FIG. 10.

At block 1915, the AP 105 may communicate with the STA based on the one or more OBSS coordination parameters, where communication with the STA is based on the configuration message as described above with reference to FIGs. 2 through 4. In certain examples, the operations of block 1915 may be performed by the OBSS communication component as described with reference to FIG. 10.

It should be noted that these methods describe possible implementation, and that the operations and the steps may be rearranged or otherwise modified such that other implementations are possible. In some examples, aspects from two or more of the methods may be combined. For example, aspects of each of the methods may include steps or aspects of the other methods, or other steps or techniques described herein. Thus, aspects of the disclosure may provide for access point guided reuse.

The description herein is provided to enable a person skilled in the art to make or use the disclosure. Various modifications to the disclosure will be readily apparent to those skilled in the art, and the generic principles defined herein may be applied to other variations without departing from the scope of the disclosure. Thus, the disclosure is not to be limited to the examples and designs described herein but is to be accorded the broadest scope consistent with the principles and novel features disclosed herein.

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different PHY locations. Also, as used herein, including in the claims, "or" as used in a list of items (for example, a list of items prefaced by a phrase such as "at least one of' or "one or more") indicates an inclusive list such that, for example, a list of at least one of A, B, or C means A or B or C or AB or AC or BC or ABC (i.e., A and B and C).

Computer-readable media includes both non-transitory computer storage media and communication media including any medium that facilitates transfer of a computer program from one place to another. A non-transitory storage medium may be any available medium that can be accessed by a general purpose or special purpose computer. By way of example, and not limitation, non-transitory computer-readable media can include RAM, ROM, electrically erasable programmable read only memory (EEPROM), compact disk (CD) ROM or other optical disk storage, magnetic disk storage or other magnetic storage devices, or any other non-transitory medium that can be used to carry or store desired program code means in the form of instructions or data structures and that can be accessed by a general-purpose or special-purpose computer, or a general-purpose or special-purpose processor. Also, any connection is properly termed a computer-readable medium.

For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

The wireless communications system or systems described herein may support synchronous or asynchronous operation. For synchronous operation, the base stations may have similar frame timing, and transmissions from different base stations may be approximately aligned in time. For asynchronous operation, the base stations may have different frame timing, and transmissions from different base stations may not be aligned in time. The techniques described herein may be used for either synchronous or asynchronous operations.

Thus, aspects of the disclosure may provide for access point guided reuse. It should be noted that these methods describe possible implementations, and that the operations and the steps may be rearranged or otherwise modified such that other implementations are possible. In some examples, aspects from two or more of the methods may be combined.

The various illustrative blocks and modules described in connection with the disclosure herein may be implemented or performed with a general-purpose processor, a digital signal processor (DSP), an ASIC, an field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine.

A processor may also be implemented as a combination of computing devices (e.g., a combination of a DSP and a microprocessor, multiple microprocessors, one or more microprocessors in conjunction with a DSP core, or any other such configuration). Thus, the functions described herein may be performed by one or more other processing units (or cores), on at least one integrated circuit (IC). In various examples, different types of ICs may be used (e.g., Structured/Platform ASICs, an FPGA, or another semi-custom IC), which may be programmed in any manner known in the art. The functions of each unit may also be implemented, in whole or in part, with instructions embodied in a memory, formatted to be executed by one or more general or application-specific processors.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label.

## Claims

1. A method of wireless communication comprising:
receiving (1305) a configuration message that comprises one or more overlapping basic service set, OBSS, coordination parameters, wherein the one or more OBSS coordination parameters comprise a range of a mapping between a set of OBSS preamble detection, PD, thresholds and a set of transmission power levels;
selecting (1310) an OBSS PD threshold based at least in part on the one or more OBSS coordination parameters of the configuration message;
selecting a transmission power that corresponds to the selected OBSS PD threshold according to the mapping; and
communicating (1315) with an access point, AP, using the OBSS PD threshold and the transmission power.

2. The method of claim 1, wherein the one or more OBSS coordination parameters comprise an indication of a OBSS PD threshold or a transmission power.

3. The method of claim 1, wherein the one or more OBSS coordination parameters comprise an OBSS PD threshold selection criterion, and wherein the OBSS PD threshold is selected based at least in part on the OBSS PD threshold selection criterion.

4. The method of claim 1, wherein the OBSS PD threshold is selected from within the range.

5. The method of claim 1, wherein the one or more OBSS coordination parameters comprise a range selection criterion corresponding to the mapping between the set of OBSS PD thresholds and the set of transmission power levels, wherein the OBSS PD threshold is selected using the range selection criterion.

6. The method of claim 1, further comprising:
detecting (1415) a preamble for a transmission from a device in an OBSS; and
determining (1420) to transmit a message or to refrain from transmitting the message based at least in part on the OBSS PD threshold.

7. The method of claim 6, wherein the OBSS PD threshold is selected based at least in part on the detected preamble.

8. The method of claim 1, further comprising:
identifying (1510) the mapping between the set of OBSS PD thresholds and the set of transmission power levels, wherein selecting the OBSS PD threshold or the transmission power is based at least in part on the mapping.

9. A method of wireless communication comprising:
determining (1905) one or more overlapping basic service set, OBSS, coordination parameters, wherein the one or more OBSS coordination parameters comprise a range of a mapping between a set of OBSS preamble detection, PD, thresholds and a set of transmission power levels;
transmitting (1910) a configuration message to a station, STA, the configuration message comprising the one or more OBSS coordination parameters; and
communicating (1915) with the STA based at least in part on the one or more OBSS coordination parameters.

10. The method of claim 9, further comprising:
sending (1810) the one or more OBSS coordination parameters for inclusion in a configuration message.

11. The method of claim 9, wherein communication with the STA is based at least in part on the configuration message.

12. An apparatus for wireless communication, comprising:
means for receiving (1305) a configuration message that comprises one or more overlapping basic service set, OBSS, coordination parameters, wherein the one or more OBSS coordination parameters comprise a range of a mapping between a set of OBSS preamble detection, PD, thresholds and a set of transmission power levels;
means for selecting (1310) an OBSS PD threshold based at least in part on the OBSS coordination parameters of the configuration message;
means for selecting a transmission power that corresponds to the selected OBSS PD threshold according to the mapping; and
means for communicating (1315) with an access point, AP, using the OBSS PD threshold and the transmission power.

13. The apparatus of claim 12, wherein the one or more OBSS coordination parameters comprise an OBSS PD threshold selection criterion, and wherein the means for selecting is operable to select the OBSS PD threshold based at least in part on the OBSS PD threshold selection criterion.

14. An apparatus for wireless communication, comprising:
means for determining (1905) one or more overlapping basic service set, OBSS, coordination parameters, wherein the one or more OBSS coordination parameters comprise a range of a mapping between a set of OBSS preamble detection, PD, thresholds and a set of transmission power levels;
means for transmitting (1910) a configuration message to a station, STA, the configuration message comprising the one or more OBSS coordination parameters; and
means for communicating (1915) with the STA based at least in part on the one or more OBSS coordination parameters.

15. A computer program comprising instructions to implement any method of the claims 1-8 or 9-11.

## Patentansprüche

1. Ein drahtloses Kommunikationsverfahren, umfassend:
Empfangen (1305) einer Konfigurationsnachricht, welche einen oder mehrere überlappende Basis-Dienstsatz-, OBSS, -Koordinationsparameter umfasst, wobei der eine oder die mehreren OBSS-Koordinationsparameter einen Bereich einer Abbildung zwischen einem Satz von OBSS-Präambel-Erkennungs-, PD, -Schwellen und einem Satz von Übertragungsleistungsstufen umfassen;
Auswählen (1301) einer OBSS-PD-Schwelle zumindest teilweise basierend auf dem einen oder den mehreren OBSS-Koordinationsparametern der Konfigurationsnachricht;
Auswählen einer Übertragungsleistung, welche mit der ausgewählten OBSS-PD-Schwelle gemäß der Abbildung korrespondiert; und
Kommunizieren (1315) mit einem Zugangspunkt, AP, unter Verwendung der OBSS-PD-Schwelle und der Übertragungsleistung.

2. Das Verfahren nach Anspruch 1, wobei der eine oder die mehreren OBSS-Koordinationsparameter eine Anzeige einer OBSS-PD-Schwelle oder einer Übertragungsleistung umfassen.

3. Das Verfahren nach Anspruch 1, wobei der eine oder die mehreren OBSS-Koordinationsparameter ein OBSS-PD-Schwellen-Auswahlkriterium umfassen und wobei die OBSS-PD-Schwelle zumindest teilweise basierend auf dem OBSS-PD-Schwellen-Auswahlkriterium ausgewählt ist.

4. Das Verfahren nach Anspruch 1, wobei die OBSS-PD-Schwelle aus dem Bereich ausgewählt ist.

5. Das Verfahren nach Anspruch 1, wobei der eine oder die mehreren OBSS-Koordinationsparameter ein Bereichsauswahlkriterium, welches mit der Abbildung zwischen dem Satz von OBSS-PD-Schwellen und dem Satz von Übertragungsleistungsstufen korrespondiert, umfassen und wobei die OBSS-PD-Schwelle unter Verwendung des Bereichsauswahlkriteriums ausgewählt ist.

6. Das Verfahren nach Anspruch 1, ferner umfassend:
Detektieren (1415) einer Präambel für eine Übertragung von einer Vorrichtung in einem OBSS; und
Bestimmen (1420), eine Nachricht zu übertragen oder auf das Übertragen der Nachricht zu verzichten zumindest teilweise basierend auf der OBSS-PD-Schwelle.

7. Das Verfahren nach Anspruch 6, wobei die OBSS-PD-Schwelle zumindest teilweise basierend auf der detektierten Präambel ausgewählt ist.

8. Das Verfahren nach Anspruch 1, ferner umfassend:
Identifizieren (1510) der Abbildung zwischen dem Satz von OBSS-PD-Schwellen und dem Satz von Übertragungsleistungsstufen, wobei das Auswählen der OBSS-PD-Schwelle oder der Übertragungsleistung zumindest teilweise auf der Abbildung basiert.

9. Ein drahtloses Kommunikationsverfahren, umfassend:
Bestimmen (1905) eines oder mehrerer überlappender Basis-Dienstsatz-, OBSS, -Koordinationsparameter, wobei der eine oder die mehreren OBSS-Koordinationsparameter einen Bereich einer Abbildung zwischen einem Satz von OBSS-Präambel-Erkennungs-, PD, -Schwellen und einem Satz von Übertragungsleistungsstufen umfassen;
Übertragen (1910) einer Konfigurationsnachricht zu einer Station, STA, wobei die Konfigurationsnachricht den einen oder die mehreren OBSS-Koordinationsparameter umfasst; und
Kommunizieren (1915) mit der STA zumindest teilweise basierend auf dem einen oder den mehreren OBSS-Koordinationsparametern.

10. Das Verfahren nach Anspruch 9, ferner umfassend:
Senden (1810) des einen oder der mehreren OBSS-Koordinationsparameter zur Inklusion in eine Konfigurationsnachricht.

11. Das Verfahren nach Anspruch 9, wobei eine Kommunikation mit der STA zumindest teilweise auf der Konfigurationsnachricht basiert.

12. Eine Vorrichtung zur drahtlosen Kommunikation, umfassend:
Mittel zum Empfangen (1305) einer Konfigurationsnachricht, welche einen oder mehrere überlappende Basis-Dienstsatz-, OBSS, -Koordinationsparameter umfasst, wobei der eine oder die mehreren OBSS-Koordinationsparameter einen Bereich einer Abbildung zwischen einem Satz von OBSS-Präambel-Erkennungs-, PD, -Schwellen und einem Satz von Übertragungsleistungsstufen umfassen;
Mittel zum Auswählen (1301) einer OBSS-PD-Schwelle zumindest teilweise basierend auf den OBSS-Koordinationsparametern der Konfigurationsnachricht;
Mittel zum Auswählen einer Übertragungsleistung, welche mit der ausgewählten OBSS-PD-Schwelle gemäß der Abbildung korrespondiert; und
Mittel zum Kommunizieren (1315) mit einem Zugangspunkt, AP, unter Verwendung der OBSS-PD-Schwelle und der Übertragungsleistung.

13. Die Vorrichtung nach Anspruch 12, wobei der eine oder die mehreren OBSS-Koordinationsparameter ein OBSS-PD-Schwellen-Auswahlkriterium umfassen und wobei die Mittel zum Auswählen betriebsfähig sind zum Auswählen der OBSS-PD-Schwelle zumindest teilweise basierend auf dem OBSS-PD-Schwellen-Auswahlkriterium.

14. Eine Vorrichtung zur drahtlosen Kommunikation, umfassend:
Mittel zum Bestimmen (1905) eines oder mehrerer überlappender Basis-Dienstsatz-, OBSS, -Koordinationsparameter, wobei der eine oder die mehreren OBSS-Koordinationsparameter einen Bereich einer Abbildung zwischen einem Satz von OBSS-Präambel-Erkennungs-, PD, -Schwellen und einem Satz von Übertragungsleistungsstufen umfassen;
Mittel zum Übertragen (1910) einer Konfigurationsnachricht zu einer Station, STA, wobei die Konfigurationsnachricht den einen oder die mehreren OBSS-Koordinationsparameter umfasst; und
Mittel zum Kommunizieren (1915) mit der STA zumindest teilweise basierend auf dem einen oder den mehreren OBSS-Koordinationsparametern.

15. Ein Computerprogramm mit Anweisungen zum Implementieren eines Verfahrens nach einem der Ansprüche 1-8 oder 9-11.

## Revendications

1. Un procédé de communication sans fil comprenant :
la réception (1305) d'un message de configuration qui comprend un ou plusieurs paramètres de coordination d'ensemble de services de base se chevauchant, OBSS, dans lequel les un ou plusieurs paramètres de coordination OBSS comprennent une étendue d'un mappage entre un ensemble de seuils de détection de préambule, PD, OBSS, et un ensemble de niveaux de puissance d'émission ;
la sélection (1310) d'un seuil PD OBSS sur la base au moins en partie des un ou plusieurs paramètres de coordination OBSS du message de configuration ;
la sélection d'une puissance d'émission qui correspond au seuil PD OBSS sélectionné selon le mappage ; et
la communication (1315) avec un point d'accès, AP, en utilisant le seuil PD OBSS et la puissance d'émission.

2. Le procédé selon la revendication 1, dans lequel les un ou plusieurs paramètres de coordination OBSS comprennent une indication d'un seuil PD OBSS ou d'une puissance d'émission.

3. Le procédé selon la revendication 1, dans lequel les un ou plusieurs paramètres de coordination OBSS comprennent un critère de sélection de seuil PD OBSS, et dans lequel le seuil PD OBSS est sélectionné sur la base au moins en partie du critère de sélection de seuil PD OBSS.

4. Le procédé selon la revendication 1, dans lequel le seuil PD OBSS est sélectionné dans l'étendue.

5. Le procédé selon la revendication 1, dans lequel les un ou plusieurs paramètres de coordination OBSS comprennent un critère de sélection d'étendue correspondant au mappage entre l'ensemble de seuils PD OBSS et l'ensemble de niveaux de puissance d'émission, dans lequel le seuil PD OBSS est sélectionné en utilisant le critère de sélection d'étendue.

6. Le procédé selon la revendication 1, comprenant en outre :
la détection (1415) d'un préambule pour une émission à partir d'un dispositif dans un OBSS ; et
la détermination (1420) d'émettre un message ou de s'abstenir d'émettre le message sur la base au moins en partie du seuil PD OBSS.

7. Le procédé selon la revendication 6, dans lequel le seuil PD OBSS est sélectionné sur la base au moins en partie du préambule détecté.

8. Le procédé selon la revendication 1, comprenant en outre :
l'identification (1510) du mappage entre l'ensemble de seuils PD OBSS et l'ensemble de niveaux de puissance d'émission, dans lequel la sélection du seuil PD OBSS ou de la puissance d'émission est basée au moins en partie sur le mappage.

9. Un procédé de communication sans fil comprenant :
la détermination (1905) d'un ou plusieurs paramètres de coordination d'ensemble de services de base se chevauchant, OBSS, dans lequel les un ou plusieurs paramètres de coordination OBSS comprennent une étendue d'un mappage entre un ensemble de seuils de détection de préambule, PD, OBSS, et un ensemble de niveaux de puissance d'émission ;
l'émission (1910) d'un message de configuration à une station, STA, le message de configuration comprenant les un ou plusieurs paramètres de coordination OBSS ; et
la communication (1915) avec la STA sur la base au moins en partie des un ou plusieurs paramètres de coordination OBSS.

10. Le procédé selon la revendication 9, comprenant en outre :
l'envoi (1810) des un ou plusieurs paramètres de coordination OBSS pour l'inclusion dans un message de configuration.

11. Le procédé selon la revendication 9, dans lequel la communication avec la STA est basée au moins en partie sur le message de configuration.

12. Un appareil pour une communication sans fil, comprenant :
un moyen pour recevoir (1305) un message de configuration qui comprend un ou plusieurs paramètres de coordination d'ensemble de services de base se chevauchant, OBSS, dans lequel les un ou plusieurs paramètres de coordination OBSS comprennent une étendue d'un mappage entre un ensemble de seuils de détection de préambule, PD, OBSS, et un ensemble de niveaux de puissance d'émission ;
un moyen pour sélectionner (1310) un seuil PD OBSS sur la base au moins en partie des paramètres de coordination OBSS du message de configuration ;
un moyen pour sélectionner une puissance d'émission qui correspond au seuil PD OBSS sélectionné selon le mappage ; et
un moyen pour communiquer (1315) avec un point d'accès, AP, en utilisant le seuil PD OBSS et la puissance d'émission.

13. L'appareil selon la revendication 12, dans lequel les un ou plusieurs paramètres de coordination OBSS comprennent un critère de sélection de seuil PD OBSS, et dans lequel le moyen pour sélectionner est exploitable pour sélectionner le seuil PD OBSS sur la base au moins en partie du critère de sélection de seuil PD OBSS.

14. Un appareil pour une communication sans fil, comprenant :
un moyen pour déterminer (1905) un ou plusieurs paramètres de coordination d'ensemble de services de base se chevauchant, OBSS, dans lequel les un ou plusieurs paramètres de coordination OBSS comprennent une étendue d'un mappage entre un ensemble de seuils de détection de préambule, PD, OBSS, et un ensemble de niveaux de puissance d'émission ;
un moyen pour émettre (1910) un message de configuration à une station, STA, le message de configuration comprenant les un ou plusieurs paramètres de coordination OBSS ; et
un moyen pour communiquer (1915) avec la STA sur la base au moins en partie des un ou plusieurs paramètres de coordination OBSS.

15. Un programme d'ordinateur comprenant des instructions pour mettre en œuvre un procédé selon les revendications 1 à 8 ou 9 à 11.
